# FASCICULE DE BREVET EUROPEEN

(11) **EP 0 724 829 B1**
(45) Date de publication et mention de la délivrance du brevet: **10.06.1998**
(21) Numéro de dépôt: 96450002.9
(22) Date de dépôt: 29.01.1996
(51) Int. Cl.: A01K 59/04, A01K 59/06, B30B 9/12

(54) **Dispositif de traitement d'un mélange hétérogène notamment de miel et de cire**
Vorrichtung zur Behandlung von einer heterogenen Mischung, insbesondere von einer Mischung von Honig und Wachs
Device for treating a heterogeneous mixture, in particular a mixture of honey and beewax

(30) Priorité: 31.01.1995 FR 9501302
(43) Date de publication de la demande: 07.08.1996
(73) Titulaire: Fedon, Jean, 87640 Razes (FR)
(72) Inventeur: Fedon, Jean, 87640 Razes (FR)
(74) Mandataire: Thébault, Jean-Louis

(56) Documents cités:
- AT-A- 390 864
- DE-A- 2 736 810
- US-A- 4 328 743

## Description

La présente invention a pour objet un dispositif de traitement d'un mélange hétérogène liquide-solide, notamment d'un mélange de cire et de miel dans le cas de la récolte du miel.

La récolte du miel s'effectue à partir de cadres contenus dans des hausses de ruches et agencés parallèlement les uns aux autres.

Les cadres sont initialement équipés de feuilles de cire à partir desquelles les abeilles édifient des logements hexagonaux dans lesquels elles disposent le miel, chacun des logements constituant un petit réservoir. Bien entendu, ces logements n'ont pas strictement la même hauteur et, de part et d'autre du plan médian du cadre, on trouve des logements plus ou moins en saillie, logements qui sont obturés à l'aide de cire par les abeilles.

La première opération de récupération du miel consiste à désoperculer ces logements.

Il existe des machines pour effectuer ce travail à des cadences compatibles avec les volumes issus de grosses production.

Ces machines comprennent un tapis métallique ajouré, du type à mailles, et des doigts élastiques montés rotatifs sur des arbres dont l'axe de rotation est parallèle et transversal par rapport au tapis. Les doigts élastiques, généralement des lamelles métalliques, frottent la surface des cadres et désoperculent les logements.

Les cadres désoperculés sont ensuite traités par centrifugation pour extraire le miel subsistant dans les logements.

Durant la première opération de désoperculation, l'opérateur recueille sous le tapis ajouré, par simple gravité, un mélange de cire et de miel qu'il faut traiter afin de séparer le miel et la cire.

D'une part, le miel recueilli fait partie de la production et sa récupération est nécessaire si l'on veut augmenter le rendement et, d'autre part, la cire doit être récupérée à des fins de réutilisation.

La cire récupérée est habituellement fondue pour obtenir des pains de cire qui sont, soit transformés par l'industrie pour l'incorporation dans certains produits, soit remis à des façonniers pour réaliser des feuilles destinées à garnir à nouveau des cadres en vue de leur mise en production dans des hausses de ruches.

Le problème est d'obtenir un miel avec le moins de cire possible et de récupérer la cire sous forme solide, exempte de miel et ceci avec des coûts réduits. Dans ce milieu du miel, compte tenu que le miel est collant et qu'il peut cristalliser, il faut un matériel simple et fiable. Il faut aussi qu'il consomme peu d'énergie, qu'il soit susceptible de traiter des volumes importants, avec un fonctionnement en continu, de façon à ce que cette opération ne soit pas plus chère que le traitement de l'art antérieur.

De plus, il est utile qu'un tel matériel soit servi par le même personnel que celui qui est présent sur le lieu de production. Il le faut donc de conception simple avec des interventions très limitées.

Le travail en température est exclu car il modifierait les qualités organoleptiques du miel, il faut donc prévoir un travail à température ambiante.

On sait également que le miel est un milieu tixotropique et de ce fait, il est intéressant qu'il soit travaillé sensiblement à la même température pour que sa viscosité reste constante et que la séparation soit de bonne qualité.

Le brevet US-A-4 328 743 décrit un dispositif de séparation de la cire et du miel dans un mélange obtenu à la suite d'une opération de désoperculation. Ce dispositif comprend un bâti et une trémie d'alimentation dans laquelle on introduit le mélange à traiter, ensuite le mélange cire et miel est compressé entre deux convoyeurs verticaux, munis d'orifices.

Ce dispositif ne donne pas pleinement satisfaction car la cire traitée contient encore du miel.

Aussi, la présente invention propose un dispositif de traitement d'un mélange hétérogène cire/miel à la suité d'une opération de désoperculation, afin de séparer le miel de la cire par une forte compression du mélange, ce dispositif ne requérant qu'un minimum d'énergie, travaillant en semi-continu ou continu, ne nécessitant qu'un minimum de personnel, plus exactement une fraction de temps minime du personnel servant les autres appareils de production.

Le résultat obtenu conduit à une séparation suffisamment efficace du miel et de la cire pour que les deux produits puissent être directement utilisés, la cire n'ayant plus besoin d'être fondue.

A cet effet, le dispositif de séparation de la cire et du miel dans un mélange obtenu à la suite d'une opération de désoperculation, comprenant un bâti et une trémie d'alimentation prévue pour recevoir le mélange de miel et de cire, se caractérise selon l'invention en ce que la trémie permet l'écoulement du miel et débouche sur un fourreau munie de trous, dans lequel est disposée une vis d'Archimède entraînée en rotation par une motorisation et en ce qu'il comprend des moyens d'évacuation de la cire comprimée à l'extrémité aval dudit fourreau, des moyens de récupération du miel exprimé à travers les trous dudit fourreau et des moyens antiretour de matière le long de la vis, disposés immédiatement en aval de la trémie d'alimentation.

Selon un mode de réalisation préférentiel, les moyens d'évacuation des solides comprennent un trou de passage, ménagé dans une plaque solidaire du bâti et du fourreau et un disque, venant obturer, de façon réglable, ledit trou de passage.

Selon l'invention, la vis comprend au moins une zone de compression (C) avec un pas resserré, disposée entre les moyens antiretour et les moyens d'évacuation.

De préférence, le fourreau comprend des trous avec une densité qui diminue de l'amont vers l'aval.

Plus particulièrement, les moyens de récupération des liquides comprennent un bac et une grille, disposés Sous le fourreau, sur toute sa longueur.

De façon préférentielle, la trémie d'alimentation comprend une grille de pré-égouttage.

Selon une caractéristique particulière, la grille de pré-égouttage comprend des moyens de réglage de l'inclinaison a.

Un perfectionnement de l'invention propose la mise en place, sur la grille de pré-égouttage, des barreaux aimantés prévus pour retenir les particules métalliques ainsi qu'une grille de sécurité.

Selon un agencement d'un mode de réalisation de l'invention, la vis est montée à rotation par rapport au bâti grâce à un palier et fixe en translation longitudinale afin d'assurer la reprise des efforts.

La présente invention est maintenant décrite à partir d'un mode de réalisation particulier, non limitatif, mais préférentiel, représenté sur les dessins annexés, les différentes figures illustrant :
- Figure 1, une vue en perspective schématique d'un dispositif selon l'invention avec un arrachement partiel,
- Figure 2, une vue en coupe longitudinale médiane par un plan vertical du dispositif de la figure 1, et
- Figure 3, une vue schématique simplifiée du fourreau avec la vis ôtée.

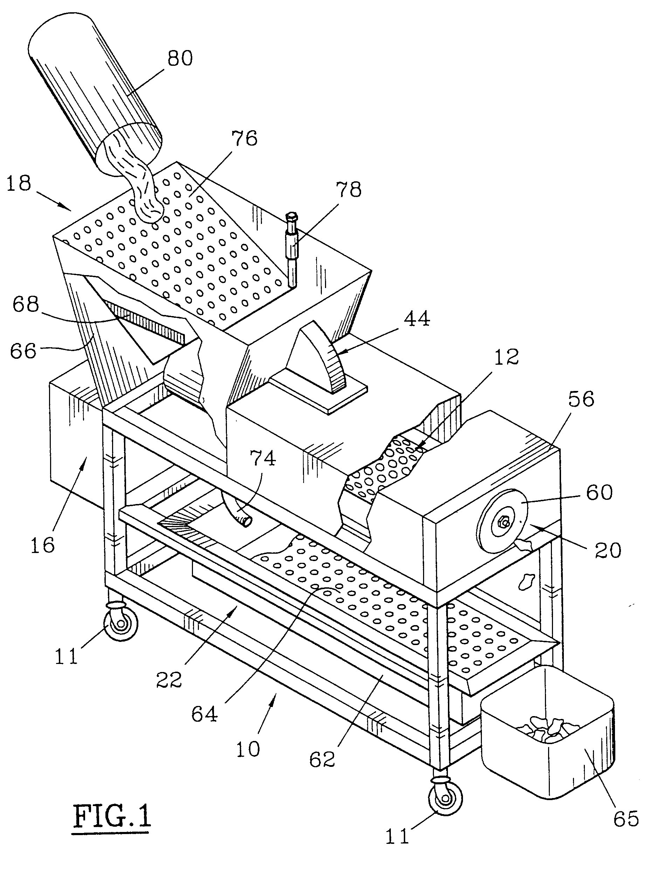

Sur la figure 1, on a représenté un bâti 10 d'une grande raideur, monté sur des roues 12 afin de le rendre déplaçable.

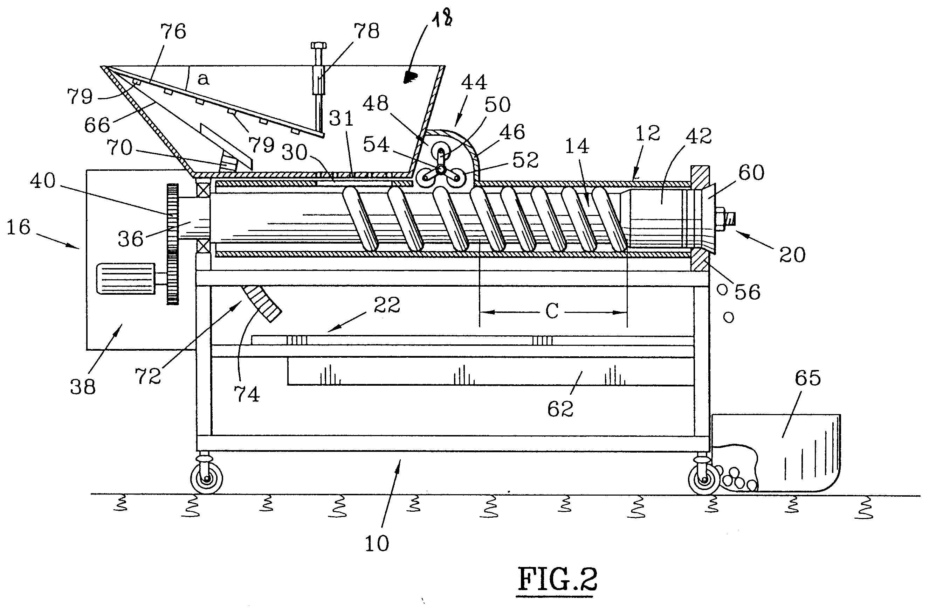

Les parties constitutives essentielles de ce dispositif sont le fourreau 12 et sa vis 14, visible sur la figure 2, la motorisation 16, la trémie d'alimentation 18, les moyens d'évacuation des solides 20 et les moyens de récupération des liquides 22.

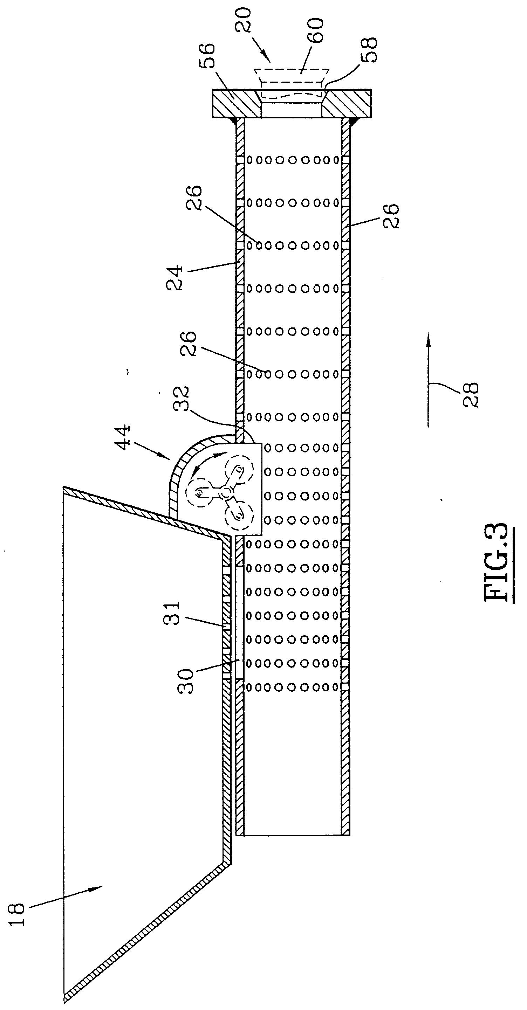

Le fourreau est représenté en détail sur la figure 3. Il comprend un tube métallique 24 perforé de séries de trous 26, régulièrement espacés sur la périphérie, dont le nombre diminue de l'amont vers l'aval, direction représentée par la flèche 28.

Ce tube comprend une ouverture 30, au droit de la trémie ainsi qu'une seconde ouverture 32 au droit des moyens anti-retour 44 décrits ultérieurement. Par ailleurs, la trémie 18 comprend une ouverture conjuguée avec l'ouverture 30 du tube métallique, cette ouverture étant protégée d'accès par une grille de protection 31.

La vis 14 représentée en détail sur la figure 2 est du type vis d'Archimède et elle tourne dans le fourreau qui en assure le guidage. L'extrémité amont 36 est maintenue axialement afin de reprendre les efforts axiaux tandis qu'elle est montée à rotation par rapport au bâti grâce à un palier. La motorisation 16 comprend un motoréducteur 38 qui coopère avec un pignon 40 solidaire de l'extrémité amont de la vis.

L'extrémité aval 42 se prolonge jusqu'au droit des moyens d'évacuation des solides 20, le fourreau étant solidarisé à ces moyens.

La vis elle-même présente des particularités puisque le pas varie suivant l'axe longitudinal et il est prévu une zone de compression C dans laquelle le pas de la vis est constant mais resserré. Cette zone se situe immédiatement après les moyens anti-retour 44.

Ces moyens anti-retour 44 comprennent un boîtier 46 qui abrite un trèfle 48 comportant trois bras 50 à l'extrémité de chacun desquels est disposée une palette 52 dont le plan est orienté longitudinalement.

Les trois bras sont réunis sur un même axe transversal 54, avec une équirépartition angulaire. Cet axe est monté libre en rotation.

La dimension des palettes et leur forme ainsi que la distance de l'axe transversal 54 par rapport à l'axe longitudinal de la vis sont telles que les palettes coopèrent avec le fond du filet de la vis.

Le profil de la vis à son extrémité aval 42 est modifié par suppression du filet et augmentation du diamètre pour laisser un volume limité entre la vis et le fourreau de façon à augmenter la compression.

Les moyens d'évacuation des solides 20 comprennent une plaque 56 solidaire du bâti 10 et du fourreau 24, munie d'un trou de passage 58 dont le diamètre est sensiblement égal au diamètre du fourreau et dont la périphérie est biseautée extérieurement.

Un disque 60 est monté réglable axialement grâce à un ensemble vis-écrou par rapport à la plaque 56. Ce disque est biseauté sur sa périphérie avec un profil conjugué avec celui du trou, ce qui permet un réglage de l'ouverture de sortie.

Les moyens de récupération du liquide comprennent un bac 62 amovible, monté en appui sur le bâti 10, ledit bac étant surmonté d'une grille fine de séparation 64. Le bac est situé sous le fourreau et se prolonge sur toute sa longueur.

A l'extrémité aval, un bac de récupération 65 est disposé au droit des moyens d'évacuation 20, afin de collecter la cire comprimée à la sortie du trou 58.

Sur les trois figures, on a représenté tous les éléments constitutifs de la trémie d'alimentation 18.

Cette trémie comprend une paroi inclinée de récupération 66, qui comprend un guide 68 ainsi qu'un orifice d'évacuation 70 prolongé par un tuyau flexible d'écoulement 72 dont l'extrémité libre 74 se trouve au-dessus de la grille 64 du bac 62.

Au-dessus de cette paroi inclinée de récupération, il est disposé une grille de pré-égouttage 76, dont l'angle a est réglable grâce à des vis 78, en prise sur les bords de la trémie. Cette grille comprend des barreaux aimantés 79 fixés sur sa face inférieure afin de retenir les particules et corps métalliques qui viendraient à se trouver sur cette grille.

La grille débouche en partie inférieure au droit du trou 30 ménagé dans le fourreau et le mélange tombe sur la vis comme cela est schématiquement représenté sur la figure 2.

Sur les figures 1 et 2, on a aussi représenté un récipient verseur 80 qui peut également être un tuyau d'alimentation en provenance d'une machine de désoperculation travaillant à proximité.

Le fonctionnement du dispositif qui vient d'être décrit est exposé ci-après, ce qui fera ressortir tous les avantages attachés à ce mode de réalisation.

L'opérateur verse le mélange hétérogène de miel et de particules de cire de désoperculation contenu dans le récipient 80 sur la grille 76 de la trémie 18. Le miel s'écoule à travers la grille pour une bonne partie. Un réglage de l'inclinaison **a** permet d'ajuster la vitesse d'écoulement du mélange sur la grille en fonction de la viscosité de ce mélange.

Les barreaux aimantés 79 permettent de retenir les clous, agrafes qui peuvent se trouver entraînés lors de l'opération de désoperculation.

Le miel écoulé est collecté par la paroi inclinée 66 et le guide 68 puis évacué par le tuyau flexible 72 jusque dans le bac 62 après avoir subi une ultime filtration par la grille fine 64 disposée au-dessus du bac.

Le mélange écoulé au droit de l'extrémité de la grille 76 de la trémie tombe dans l'ouverture 30 du fourreau 24.

Le motoréducteur 16, mis en route, entraîne la vis en rotation et le miel s'écoule par gravité à travers les trous 26 du fourreau dès les premiers pas puis le pas se resserre si bien que l'ensemble contenu dans le fourreau se comprime au droit de la zone C.

Lors de la mise en service, il faut créer un "bouchon", c'est-à-dire qu'il faut remplir le volume entre la vis et le fourreau jusqu'au disque 60 qui freine la progression de la cire, créant une contre pression. Aussi, on fait tourner le dispositif sans produire immédiatement de la cire.

C'est là qu'interviennent les moyens antiretour 44.

En effet, les palettes tournent au bout de leur bras autour de l'axe 54. En effet, les palettes sont guidées par le filet de la vis. Simultanément, elles interdisent à la cire de tourner avec la vis sans progresser longitudinalement et de revenir en arrière.

La cire ainsi comprimée est fortement pressée et le miel qui a pu subsister en est exprimé à travers les trous du fourreau.

La diminution du taux de trous sur la périphérie permet de donner à la cire sa cohésion qui est complétée dans la partie lisse aval de la vis dont le diamètre est augmenté.

La cire est ensuite évacuée sous forme de fragments comprimés entre le trou 58 et le disque 60.

L'écart du disque par rapport au trou permet de faire varier la pression de compactage.

La vis se trouve poussée axialement vers l'amont mais le montage par rapport au bâti évite tout mouvement longitudinal de la vis.

On peut prévoir un carter de propreté, non référencé, et représenté partiellement sur la figure 1.

Le dispositif selon l'invention fonctionne avec l'assistance très réduite d'un opérateur et quasiment sans intervention lorsque l'alimentation de la trémie s'effectue par un flexible, en continu à partir de la machine de désoperculation.

Des essais ont montré que la cire ainsi obtenue et utilisable par les façonniers directement tout comme par l'industrie.

Quant au miel, il est purifié de façon suffisante pour être associé au miel issu de centrifugation. La floculation et la décantation habituelle permettent l'affinage final qui rend le miel prêt à la consommation.

## Revendications

1. Dispositif de séparation de la cire et du miel dans un mélange obtenu à la suite d'une opération de désoperculation, comprenant un bâti (10) et une trémie d'alimentation (18) prévue pour recevoir le mélange de miel et de cire, caractérisé en ce que la trémie permet l'écoulement du miel et débouche sur un fourreau (12) munie de trous (26), dans lequel est disposée une vis d'Archimède (14) entraînée en rotation par une motorisation (16) et en ce qu'il comprend des moyens d'évacuation (20) de la cire comprimée à l'extrémité aval dudit fourreau, des moyens de récupération (22) du miel exprimé à travers les trous dudit fourreau et des moyens antiretour (44) de matière le long de la vis, disposés immédiatement en aval de la trémie d'alimentation.

2. Dispositif selon la revendication 1, caractérisé en ce que les moyens d'évacuation des solides (20) comprennent un trou de passage (58), ménagé dans une plaque (56) solidaire du bâti (10) et du fourreau (24) et un disque (60), venant obturer, de façon réglable, ledit trou de passage.

3. Dispositif selon la revendication 1 ou 2, caractérisé en ce que la vis comprend au moins une zone de compression (C) avec un pas resserré, disposée entre les moyens antiretour (44) et les moyens d'évacuation (20).

4. Dispositif selon la revendication 1, 2 ou 3, caractérisé en ce que le fourreau (12) comprend des trous (26) avec une densité qui diminue de l'amont vers l'aval (28).

5. Dispositif selon l'une quelconque des revendications précédentes, caractérisé en ce que les moyens de récupération (22) des liquides comprennent un bac (62) et une grille (64), disposés sous le fourreau (12), sur toute sa longueur.

6. Dispositif selon l'une quelconque des revendications précédentes, caractérisé en ce que la trémie d'alimentation (18) comprend une grille (76) de pré-égouttage.

7. Dispositif selon l'une quelconque des revendications précédentes, caractérisé en ce que la grille (76) de pré-égouttage comprend des moyens de réglage (78) de l'inclinaison a.

8. Dispositif selon l'une quelconque des revendications précédentes, caractérisé en ce que la grille (76) de pré-égouttage comprend des barreaux aimantés (79), prévus pour retenir les particules métalliques ainsi qu'une grille de sécurité (31).

9. Dispositif selon l'une quelconque des revendications précédentes, caractérisé en ce que la vis (14) est montée à rotation par rapport au bâti (10) grâce à un palier et fixe en translation longitudinale afin d'assurer la reprise des efforts.

## Claims

1. Device for separating wax and honey from a mixture obtained following the removal of the plug from the cell, comprising a frame (10) and a feed hopper (18) designed to receive the mixture of honey and wax, characterized in that the hopper allows the honey to flow through and empties into a sleeve (12) equipped with holes (26) in which is disposed an Archimedean screw (14) driven in rotation by a motor device (16) and in that it comprises means (20) for discharging the compressed wax at the downstream end of the said sleeve, means (22) for recovering honey expressed through the holes of said sleeve and means (44) for preventing the material from flowing back along the screw, said means being disposed immediately downstream of the feed hopper.

2. Device as claimed in claim 1, characterized in that said means (20) for discharging the solids comprises a through hole (58) formed in a plate (56) which is joined to the frame (10) and the sleeve (24) and a disk (60) which can be adjusted to close said through hole.

3. Device as claimed in claims 1 or 2, characterized in that the screw comprises at least one compression zone (C) with a reduced pitch, disposed between said means for preventing the reverse movement (44) and said discharging means (20).

4. Device as claimed in claims 1, 2 or 3, characterized in that the sleeve (12) comprises holes (26), of a density which decreases from upstream to downstream (28).

5. Device as claimed in any one of the preceding claims, characterized in that said means (22) for recovering the liquids comprises a tank (62) and a grate (64) disposed under the sleeve (12) along its whole length.

6. Device as claimed in any one of the preceding claims, characterized in that the feed hopper (18) comprises a grate (76) for pre-draining.

7. Device as claimed in any one of the preceding claims, characterized in that the pre-drainage grate (76) comprises means (78) of adjusting its angle of slope a.

8. Device as claimed in any one of the preceding claims, characterized in that the pre-drainage grate (76) is equipped with bar magnets (79) designed to retain any metal particles, as well as a safety grate (31).

9. Device as claimed in any one of the preceding claims, characterized in that the screw (14) is mounted on the frame (10) in such a way that it can rotate thanks to a bearing and is prevented from longitudinal movement, in order to ensure that the force is taken up again.

## Patentansprüche

1. Vorrichtung zum Trennen von Wachs und Honig in einer Mischung, die nach einem Entdeckelungsvorgang erhalten wurde, umfassend ein Gestell (10) und einen Einfüllbehälter (18), der vorgesehen ist, um die Mischung aus Honig und Wachs aufzunehmen, dadurch gekennzeichnet, daß der Einfüllbehälter das Abfließen des Honigs und den Übertritt zu einer mit Löchern (26) versehenen Hülse (12) erlaubt, in der eine archimedische Schraube (14), die durch einen Antrieb (16) angetrieben ist, angeordnet ist, und daß sie Mittel (20) zum Entleeren des komprimierten Wachses am stromabwärtigen Ende der Hülse, Mittel (22) zum Gewinnen des Honigs, der durch die Löcher der Hülse ausgedrückt wird, und Mittel (44) zum Verhindern eines Rücklaufs von Material längs der Schraube, die unmittelbar stromabwärts vom Einfülltrichter angeordnet sind, aufweist.

2. Vorrichtung nach Anspruch 1, dadurch gekennzeichnet, daß die Mittel (20) zum Entleeren von Feststoffen eine Durchtrittsöffnung (58), die in einer fest am Gestell (10) und an der Hülse (24) montierten Platte (56) angebracht ist, und eine Scheibe (60) zum einstellbaren Verschließen der Durchtrittsöffnung aufweisen.

3. Vorrichtung nach Anspruch 1 oder 2, dadurch gekennzeichnet, daß die Schraube wenigstens eine Kompressionszone (C) mit verminderter Steigung umfaßt, die zwischen den Mitteln (44) zum Verhindern eines Rücklaufs und den Mitteln (20) zum Entleeren angeordnet ist.

4. Vorrichtung nach Anspruch 1, 2 oder 3, dadurch gekennzeichnet, daß die Hülse (12) Löcher (26) einer Dichte umfaßt, die in Förderrichtung (28) abnimmt.

5. Vorrichtung nach einem der vorhergehenden Ansprüche, dadurch gekennzeichnet, daß die Mittel (22) zum Gewinnen von Flüssigkeiten einen Trog (62) und einen Rost (64) umfassen, die unter der Hülse (12) auf deren gesamter Länge angeordnet sind.

6. Vorrichtung nach einem der vorhergehenden Ansprüche, dadurch gekennzeichnet, daß der Einfüllbehälter (18) einen Rost (76) zum Vorabtropfen aufweist.

7. Vorrichtung nach einem der vorhergehenden Ansprüche, dadurch gekennzeichnet, daß der Rost (76) zum Vorabtropfen Mittel (78) zum Einstellen der Neigung a aufweist.

8. Vorrichtung nach einem der vorhergehenden Ansprüche, dadurch gekennzeichnet, daß der Rost (76) zum Vorabtropfen Magnetstäbe (79), die vorgesehen sind, um metallische Teilchen festzuhalten, ebenso wie einen Sicherheitsrost (31) umfaßt.

9. Vorrichtung nach einem der vorhergehenden Ansprüche, dadurch gekennzeichnet, daß die Schraube (14) zur Drehung in bezug auf das Gestell (10) über ein Lager montiert und längstranslatorisch fixiert ist, um die Belastungsaufnahme sicherzustellen.
